# EUROPEAN PATENT SPECIFICATION

(11) **EP 2 421 743 B1**
(45) Date of publication and mention of the grant of the patent: **22.01.2014**
(21) Application number: 09843734.6
(22) Date of filing: 24.04.2009
(51) Int. Cl.: B62D 25/16, B62D 25/18

(54) **A DEVICE FOR ATTACHING A STAY TO A VEHICLE FRAME AND A VEHICLE COMPRISING THE DEVICE**
VORRICHTUNG ZUR BEFESTIGUNG EINES HALTERS AN EINEM FAHRZEUGRAHMEN UND DIE VORRICHTUNG UMFASSENDES FAHRZEUG
DISPOSITIF POUR FIXER UN ETAI A UN CHASSIS DE VEHICULE ET VEHICULE COMPRENANT LE DISPOSITIF

(43) Date of publication of application: 29.02.2012
(73) Proprietor: Volvo Lastvagnar AB, 405 08 Göteborg (SE)
(72) Inventor: OLSSON, Gustav, SE-418 72 Göteborg (SE); WIKTORSSON, Daniel, SE-417 20 Göteborg (SE); SÖDERSTRÖM, Hans, SE-421 62 Västra Frölunda (SE)
(74) Representative: Eriksson, Tommy
(86) International application number: PCT/SE2009/000217
(87) International publication number: WO 2010/123414

(56) References cited:
- EP-A1- 1 964 755
- DE-A1- 19 954 062
- DE-A1-102007 038 548
- FR-A1- 2 686 846
- FR-A1- 2 686 846
- SE-C2- 512 263
- SE-C2- 530 971
- US-A1- 2008 029 989

## Description

### FIELD OF THE INVENTION

The present invention relates to a device for attaching a stay to a vehicle frame according to the preamble of claim 1. The invention is further directed to a vehicle comprising the attachment device.

The invention will below be described for a heavy vehicle in the form of a cargo-transporting road vehicle in the form of a truck. This should however only be regarded as one possible application and the invention may further be applied in a people-transporting vehicle, such as a bus, an agricultural machine or a work machine for transporting cargo, material, earth etc.

In the context of cargo-transporting road vehicles traveling on wheels fitted with tires, each outer tire of the vehicle or trailer has an arched cover or mudguard shrouding the top of the tire to inhibit spray arising from travel on wet and/or dirty roads. The mudguard is attached to the frame or chassis of the vehicle via the attachment device.

In the future, the tires tend to be wider, which necessitates wider and heavier mudguards. There is therefore a desire to achieve a more rigid attachment device. Further, the attachment device for carrying a mudguard is subjected to relatively large vibrations during traveling.

DE 198 10 252 and EP 1964755 discloses an example of a device for attaching a stay to a vehicle frame. The device comprises a base plate configured for being attached to the vehicle frame, wherein base plate comprises a hole for receiving a first end of the stay. A lower curved plate and an upper curved plate project from the base plate from opposite sides of the hole. The upper and lower curved plates are welded to the base plate and form a cylindrical opening at a distance from the hole in the base plate. During mounting, the stay end is introduced via a linear movement of the stay through the cylindrical opening to the hole in the base plate, which requires an accurate alignment of the stay with said cylindrical opening and the hole during assembly. The stay is thereafter clamped in place in the cylindrical opening via two separate clamps. Such an assembly may be difficult and hard for an operator due to the fact that the heavy mudguard is pre-mounted on the stay when the stay is mounted to the frame.

### SUMMARY OF THE INVENTION

An object of the invention is to achieve a rigid attachment device, which creates conditions for an easy mounting.

This object is achieved in an attachment device according to claim 1. Thus, it is achieved by a device for attaching a stay to a vehicle frame, wherein the device comprises an attachment member configured for being rigidly connected to the vehicle frame, wherein the attachment member comprises a first support surface for supporting an upper surface of a first end of the stay and a second support surface at a distance from the first support surface for supporting a lower surface of the stay at a distance from a first end of the stay. The device comprises a clamp member for clamping the stay against the second support surface. The clamp member is movably arranged in relation to the second support surface between an open position and a clamping position. The clamp member is arranged so that a clamp surface of the clamp member can be positioned at a sufficient distance from the second support surface in the open position for allowing a pivoting motion of the stay about a pivot point at the first support surface to a position resting on the second support surface during assembly.

Thanks to such a movable design of the clamp member, the stay with a mudguard attached can be introduced to its intended position in an easy way. Further, this design creates good conditions for a design of the stay and/or the attachment device that inhibits undesired withdrawal of the stay from the attachment member after the stay is positioned in its intended position.

In a first assembly step, the attachment member is attached to a side of the frame, preferably via a bolt connection. In a second assembly step, the stay end is positioned in contact with the first support surface with the stay in an inclined position, whereafter the stay is pivoted about a pivot axis at the first support surface down to its intended position in contact with the second support surface. The operator can now let go of the stay, wherein the mudguard weight of the stay and the mudguard is carried solely by the attachment member. Thereafter the clamp member is positioned on the stay and fastened to the attachment member so that the stay is clamped between the attachment member and the clamp member.

According to an example embodiment, the clamp member is removably arranged in relation to the attachment member. Thanks to the removability, the stay can be positioned in contact with the attachment member and held in place solely by the attachment member with the clamp removed and out of the way for the maneuvering of the stay.

According to a further example embodiment, the clamp member is pivotably arranged relative to the attachment member between a non-fastened position and said clamping position. This feature further facilitates assembly due to the fact that the attachment member provides support at a pivot axis for fastening the clamp member at a distance from the pivot axis. Accordingly, the clamp member is preferably configured to be fastened to the attachment member via a fastening means at a distance from the pivot axis between the clamp member and the attachment member.

According to a further example embodiment, the fastening means is configured so that a fastening direction forms an oblique angle to a frame side of the vehicle frame during mounting. The space for access of the attachment device is in many applications limited once the stay with the attached mudguard is attached to the frame and this design creates conditions for a sufficient access of the clamp member for fastening it to the attachment member.

According to a further example embodiment, the second support surface comprises means for engagement with the stay for preventing the stay from any undesired withdrawal from the attachment member before the clamp member is fastened to the attachment member. This feature further improves the assembly in that it provides a safety function. Thus, the operator can let go of the stay after introduction to its intended position and even leave the immediate surroundings. Such engagement means may be formed by a male part - female part interconnection, such as a circumferential ridge-valley configuration in the attachment means and the stay.

### BRIEF DESCRIPTION OF THE DRAWINGS

The invention will be explained below, with reference to the embodiment shown on the appended drawings, wherein
- FIG 1: is perspective view of a truck from behind,
- FIG 2: is a perspective view of an arrangement of the mudguards in the truck in figure 1,
- FIG 3: is a perspective view of a device for attaching a stay to the vehicle frame according to one embodiment,
- FIG 4: is an exploded view of the device in figure 3,
- FIG 5A-5D: show an attachment member of the attachment device in figure 3 in different views,
- FIG 6A-6D: show a clamp member of the device in figure 3 in different views,
- FIG 7A-7D: show a stay of the device in figure 3 in different views, and
- FIG 8-10: show three steps in a method for mounting the stay in the attachment device in a schematic, perspective view.

### DETAILED DESCRIPTION OF A PREFERRED EMBODIMENT OF THE INVENTION

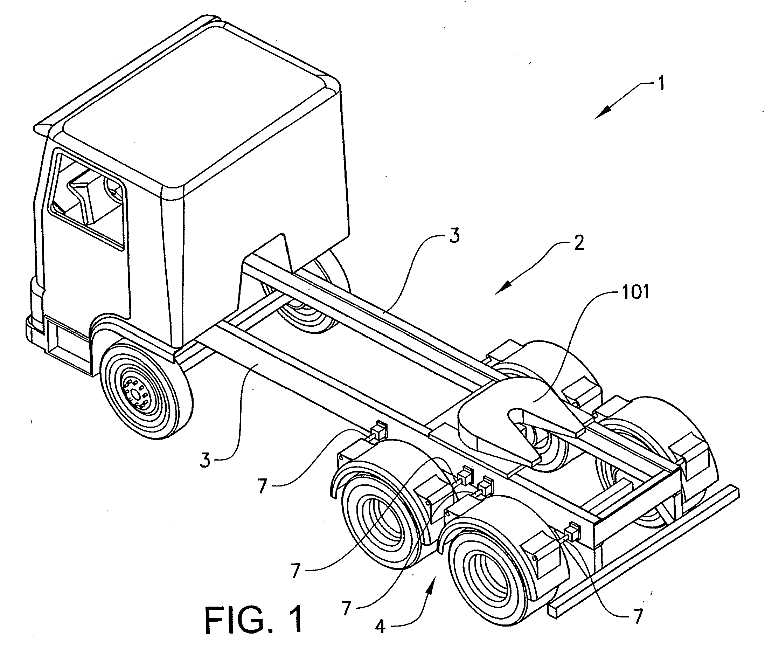

Figure 1 shows a truck 1 in a perspective view from behind. More precisely, a semi-trailer tractor 1 is shown in figure 1. A semi-trailer can be connected to the semi-tractor via a so-called fifth wheel 101.

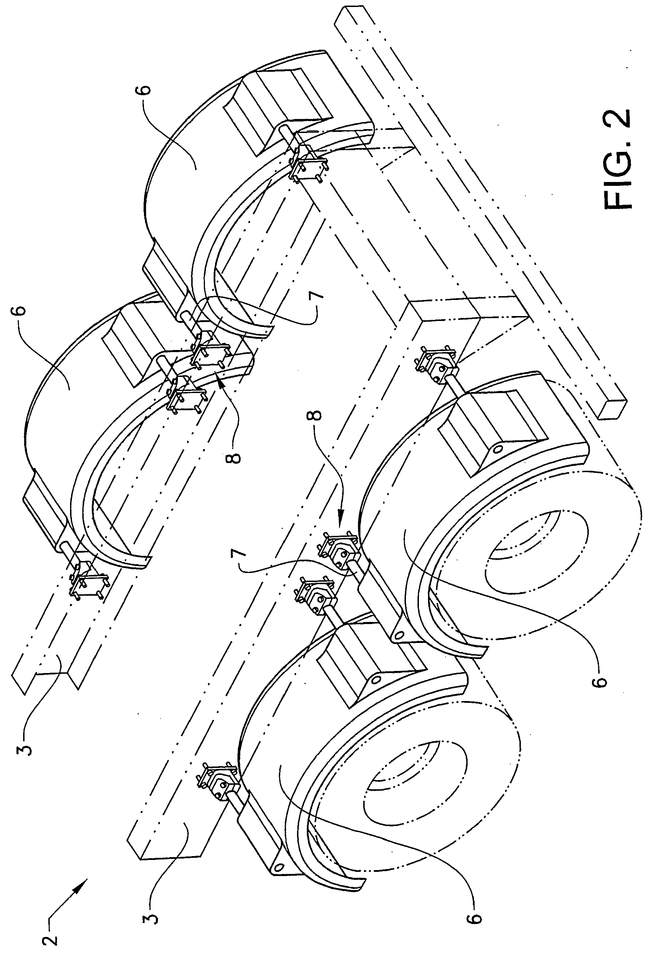

The truck 1 comprises a frame 2, in the form of two substantially parallel longitudinal side members 3, each with a U-shaped profile, which are united by a plurality of cross members (not shown). The side and cross members are joined together by bolt or rivet fastenings. The side members are provided with a hole configuration for attaching different components to the frame. Further, figure 1 and 2 schematically show a twin-wheel mudguard arrangement 4. The mudguard(s) 6 is connected to the frame via at least one stay 7. Figure 2 further shows a device 8 for attaching the stay 7 to the frame 2.

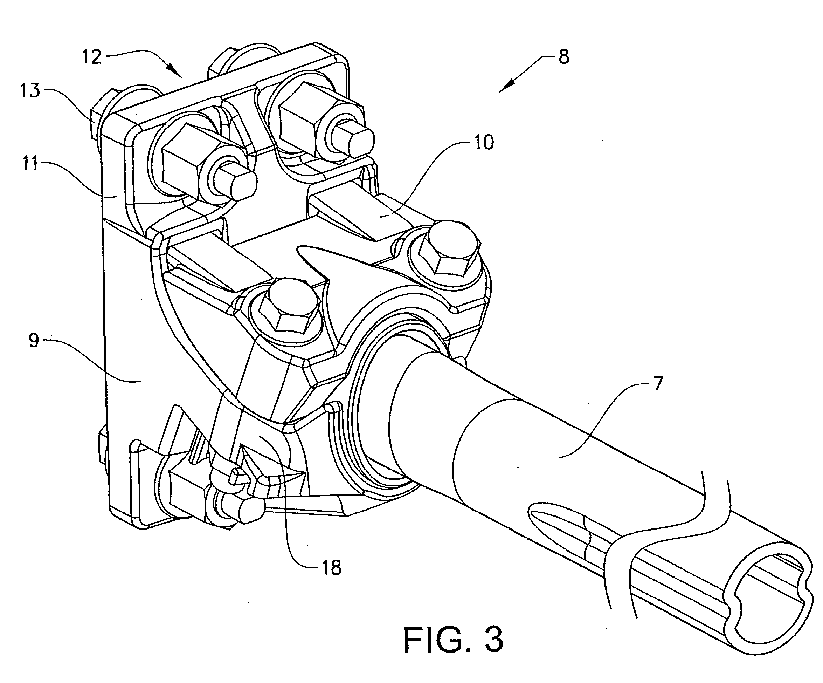

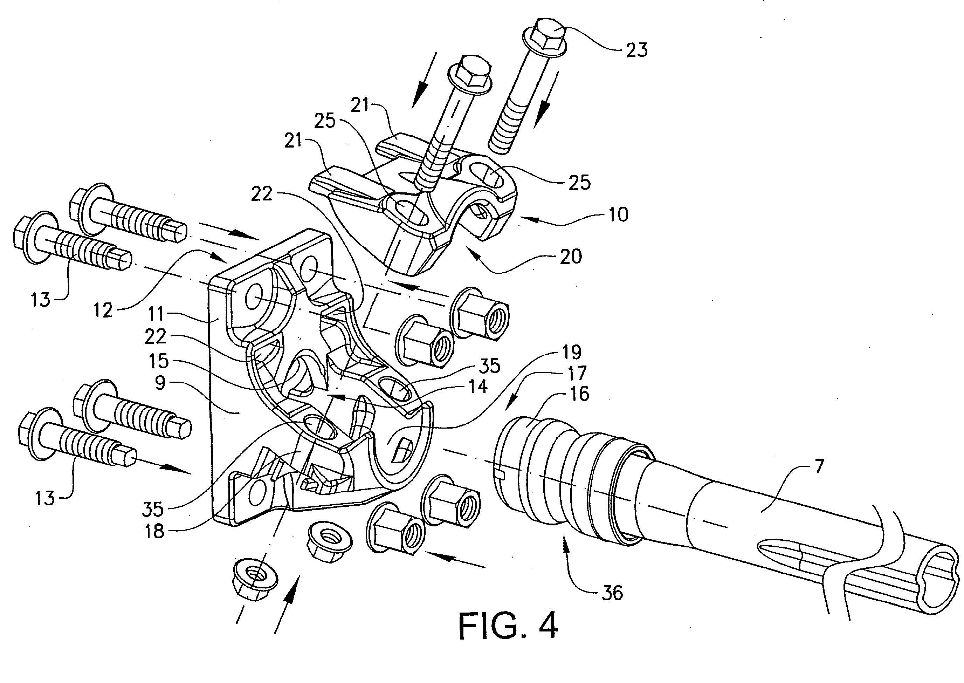

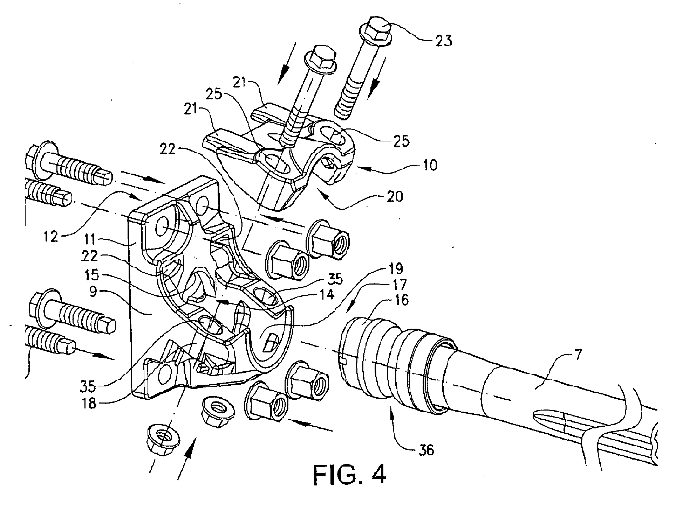

Figure 3 is a perspective view of the device 8 for attaching the stay 7 to the frame 2 according to one embodiment. The stay 7 is here clamped in position in a seat in the attachment device 8. Figure 4 shows the attachment device 8 and the stay 7 in an exploded view. Below will be referred to both figure 3 and 4.

The attachment device 8 comprises an attachment member 9 and a clamp member 10. The attachment member 9 comprises a base portion 11 (or base plate) which is configured for being fastened to the frame 2. The base portion 11 is provided with a plurality of holes 12, which are configured to be matched with corresponding holes in one of said frame side members, wherein a bolt 13 is introduced in each pair of holes for fastening the attachment member 9 to the frame. More specifically, the base portion 11 has four holes at the corners of a rectangle. Further, the base portion 11 comprises an opening in the form of a through hole 14. The wall defining an upper portion of the hole 14 provides a first support surface 15 for supporting an upper surface 16 of a first end 17 of the stay 7.

The attachment member 9 further comprises a projecting portion 18 projecting from the base portion 11. The projecting portion 18 comprises a second support surface 19, which is positioned at a distance from the first support surface 15 for supporting a lower surface of the stay 7 at a distance from the end 17 of the stay 7. The second support surface 19 forms a curved structure with a cylindrical shape, forming a seat for the stay 7. More specifically, the curved surface 19 forms a partly oval shape. The base portion 11 and the projecting portion 18 form a one-piece unit. Preferably, the base portion 11 and the projecting portion 18 form a single casted piece.

The clamp member 10 is configured for clamping the stay 7 against the second support surface 19. The clamp member 10 is movably arranged in relation to the second support surface 19 between an open position and a clamping position. More specifically, the clamp member 10 is removably arranged in relation to the attachment member 9. Thus, a clamp surface 20 of the clamp member 10 is positioned at a sufficient distance from the second support surface 19 in the open position for allowing a pivoting motion of the stay 7 about a pivot point at the hole 14 to a position resting on the second support surface 19 during assembly. Especially, the device is configured for a pivoting motion of the stay in a vertical plane. More specifically, the device is configured for a pivoting motion of the stay with at least 15° and preferably at least 30°. The open position corresponds to that the clamp member 10 is removed from the attachment member 9. The clamp surface 20 forms a curved structure with a cylindrical shape for engagement with the stay 7. More specifically, the curved surface 20 forms a partly oval shape. Thus, the second support surface 19 of the attachment member 9 and a clamp surface 20 of the clamp member 10 form a substantially cylindrical structure for receiving the stay 7. Further, surfaces of the attachment member 9 and the clamp member 10 facing the intended position of the stay are designed with complimentary shapes in relation to the stay.

The clamp member 10 is pivotably arranged relative to the attachment member 9 between a non-fastened position in contact with the attachment member 9 and said clamping position. For this purpose, the clamp member 10 comprises at least one projection 21 and the attachment member 9 comprises a corresponding opening 22, wherein the projection 21 and the corresponding opening 22 define a pivot axis. More precisely, the clamp member 10 comprises a pair of projections 21 at a distance from each other and on opposite sides of the cylindrical clamp surface 20.

Further, the clamp member 10 is configured to be fastened to the attachment member 9 via a fastening means 23 at a distance from the pivot axis between the clamp member 10 and the attachment member 9. The clamp member comprises at least one hole 25 and the fastening means 23 comprises at least one bolt for insertion in the hole. The attachment member 9 comprises a corresponding hole 35 for receiving said fastening means 23. The fastening means 23 is accessible from an upper side of the attachment device. Further, the fastening means 23 is configured so that a fastening direction forms an oblique angle to a plane defining a frame side of the vehicle frame during mounting. The fastening direction is <90° in relation to said plane and preferably within the interval 30°-60°. According to the shown embodiment, the fastening direction is defined by the extension direction of the bolt 23.

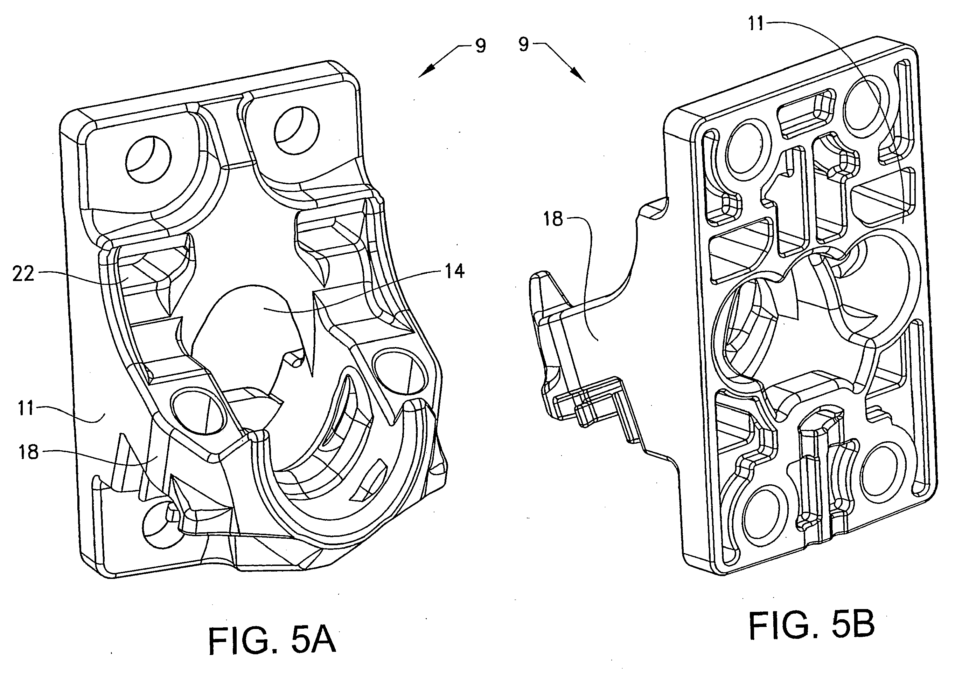

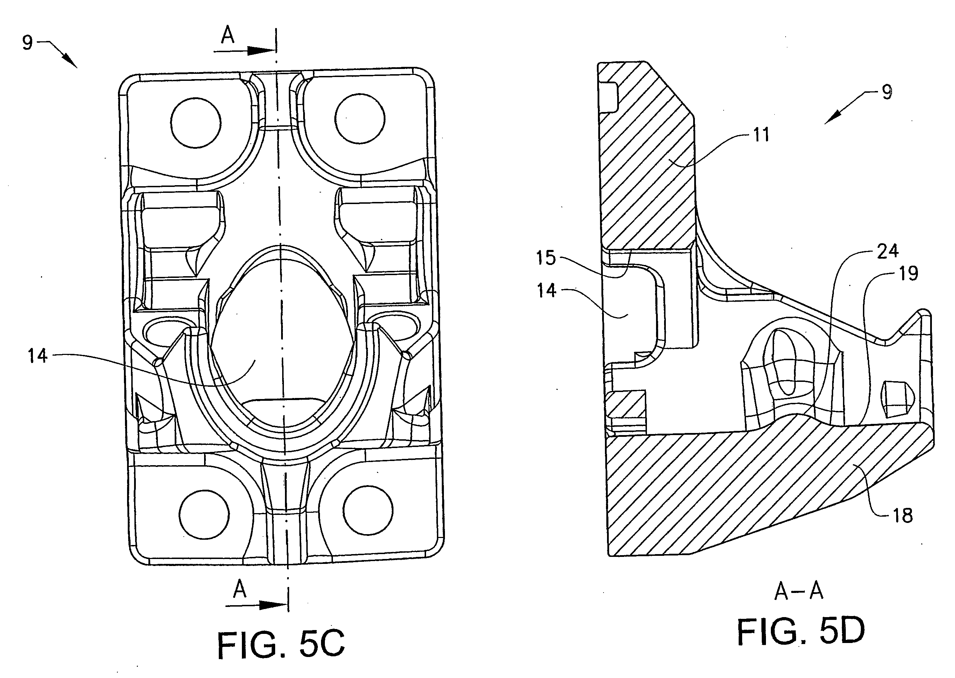

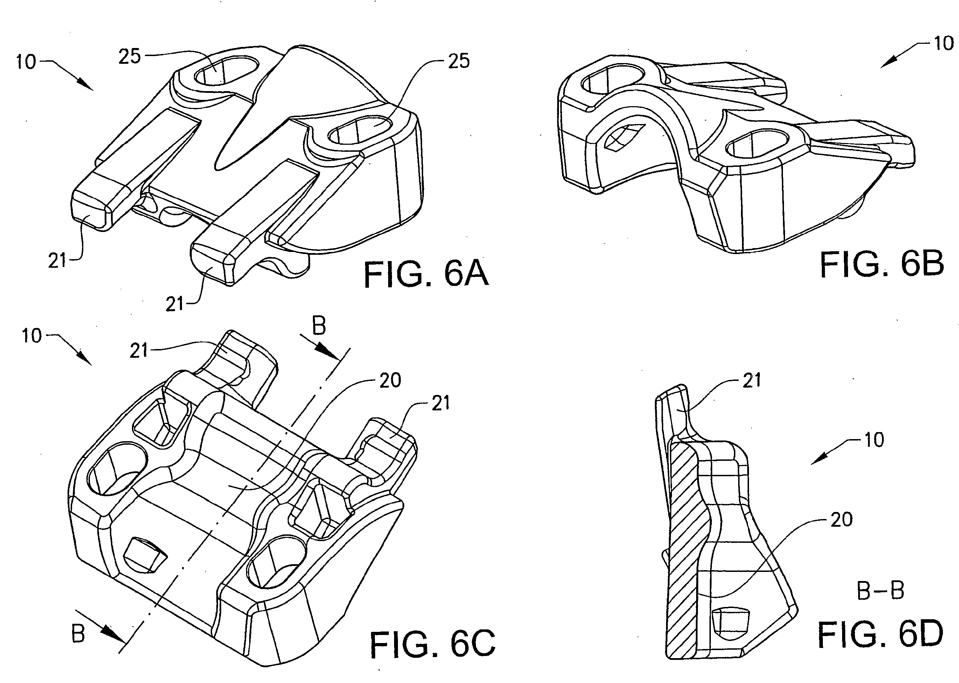

Fig 5A-5D show the attachment member 9 in different views. The second support surface 19 comprises means 24 for engagement with the stay 7 for preventing the stay from any undesired withdrawal from the attachment member during assembly before the clamp member is fastened to the attachment member. The stay 7 is provided with a correspondingly shaped engagement means 36 for a mating engagement. The engagement means 24, 36 forms a ridge-valley configuration extending in a crosswise direction to the longitudinal direction of the stay and more precisely in a circumferential direction with regard to the stay and the cylindrical second support surface 19. More precisely, the cylindrical second support surface 19 comprises an elongated portion 24 extending in the circumferential direction and projecting into the space intended for the stay 7 and the stay 7 comprises a correspondingly shaped circumferential groove 36 for engagement with the elongated portion 24. Fig 6A-6D show the clamp member 10 in different views.

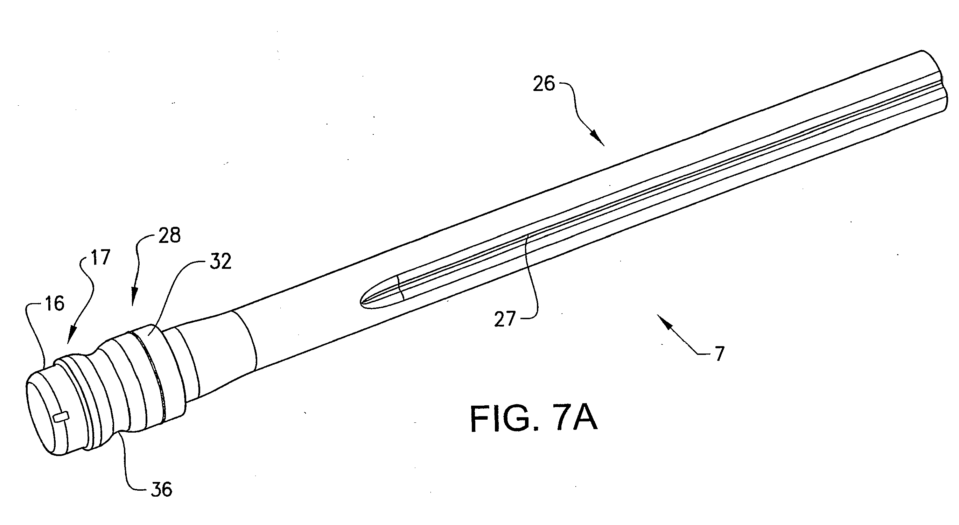

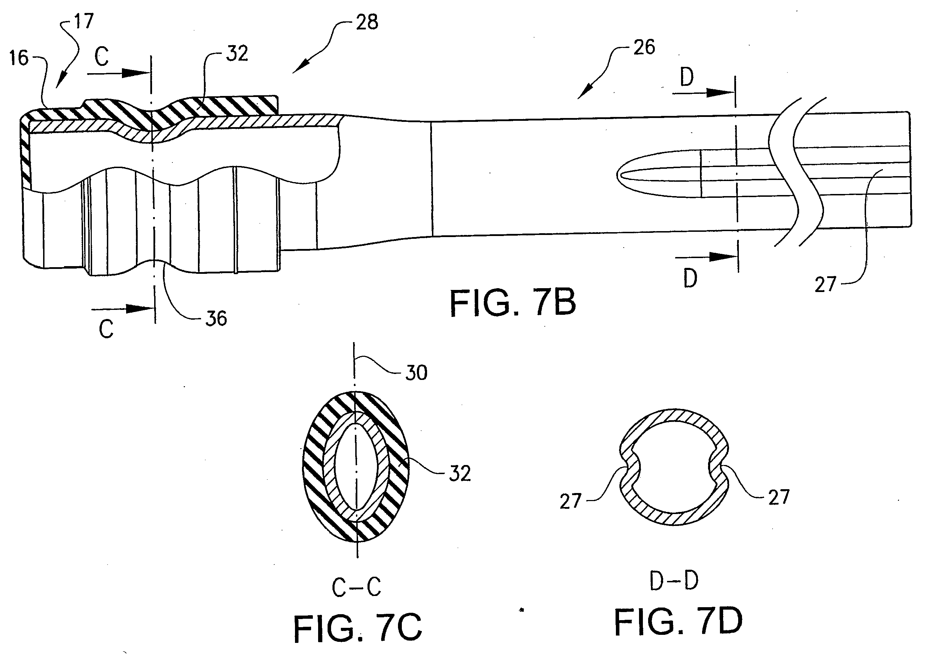

Fig 7A-7D show the stay 7 in four different views. The stay 7 is tubular. The first end 17 of the stay 7 is configured to be attached to the attachment device 8. A first part 28 of the stay, which comprises the first end 17, has a shape that prevents turning of the stay in relation to the attachment member 9. Further, the first part 28 of the stay, which comprises the first end 17, has a shape that improves the rigidity of the stay against a bending torque during operation (traveling). The first part 28 therefore has a widened outer cross sectional shape in relation to the outer dimension of the second part of the stay 7. More specifically, the first part 28 has a non-circular cross sectional shape and more precisely an oval shape. A main extension direction 30 of the oval shape extends in a vertical direction when connected to the frame side member 3 via the attachment device.

Further, the stay comprises a rigid core part and a flexible tubular element 32 arranged around the rigid core part of the stay 7 at the first end. The tubular element 32 covers the first part 28 and is configured to rest on the second support surface 19 of the attachment member 9. The flexible tubular element 32 comprises a circumferential groove 36 for mating contact with the ridge 24 in the attachment member 9.

A second part 26 of the stay 7 has a substantially circular cross sectional shape. This part 26 is configured to hold the mudguard. The stay 7 comprises means 27 for preventing a pivoting motion of the mudguard during traveling. Said means 27 comprises at least one groove extending in a longitudinal direction of the stay 7. Said means 27 is arranged in said circular cylindrical part 26 of the stay 7. More specifically, the stay comprises a longitudinal groove 27 on opposite sides of the stay.

In other words, the first part 28 of the stay 7 has an elliptically tubular cross-sectional shape, taken perpendicularly to the longitudinal axis of the stay. The second part 26 of the stay 7 has a circular tubular cross-sectional shape, taken perpendicularly to the longitudinal axis of the stay, wherein the second part extends along a predominance of a length of the stay. Furthermore, the elliptical cross-sectional shape defines a long and short cross-axis of the shroud, the long cross-axis 30 of the shroud being substantially perpendicular, in a preferred installed configuration, to a longitudinal direction of the frame side member 3.

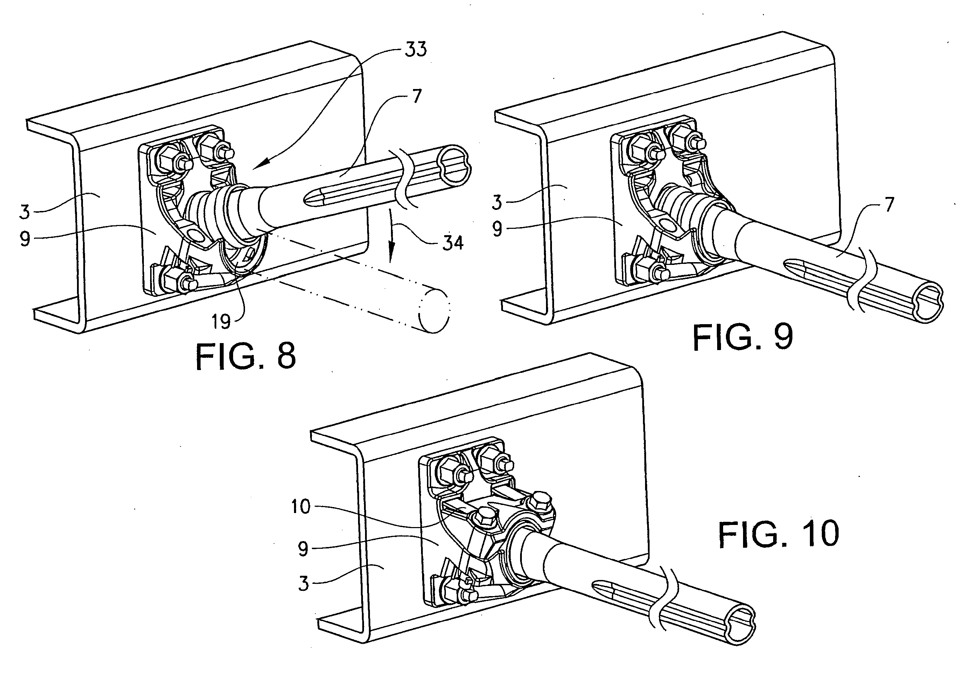

Figure 8-10 schematically show three steps for attaching the stay 7 to the frame 2. In figure 8, the attachment member 9 is already attached to an outer side face of the longitudinal side rail 3 via said bolt connection. The stay 7 is introduced in an oblique angle to the hole 14 in relation to its intended position (extending substantially perpendicular from a vertical plane). The stay 7 is then pivoted, see arrow 34, under the influence of gravity about a pivot point 33 at the hole 14 towards a position resting on the second support surface 19 of the attachment member 9. The operator can now let go of the stay, wherein the mudguard weight of the stay and the mudguard is carried solely by the attachment member 9, see figure 9.

In figure 10, the clamp member 10 is positioned on top of the stay 7 so that the projections 21 project into the corresponding openings 22 in the attachment member 9. The clamp member 10 is then fastened to the attachment member 9 via said bolt connection, wherein the contact between the projections and openings 21,22 form support for the clamp member when the bolts are tightened. More precisely, the projections and openings 21,22 form a pivot axis while tightening the bolts. The stay 7 is clamped between the attachment member 9 and the clamp member 10. The first part 28 of the stay 7 is completely enclosed in the circumferential direction in the attachment device 8.

The invention is not in any way limited to the above described embodiments, instead a number of alternatives and modifications are possible without departing from the scope of the following claims.

For example, the attachment device is not limited to carrying mudguard, but other components such as side skirts are also feasible.

Further, the invention is of course not limited to attaching the attachment member directly to the frame side member. Instead, the attachment member may be configured to be attached to an intermediate part, which in turn is attached to the frame side member. Such an intermediate part may be formed by a bracket, a stabilizer or a spring support member.

Further, according to an alternative embodiment, the clamp member does not need to be fully removable from the attachment member. It is sufficient that a clamp surface of the clamp member is positioned at a substantially greater distance from the second support surface than a height of the stay in the open position for allowing said pivoting motion during assembly. The clamp surface of the clamp member is positioned at a distance of at least 1,5 times, and preferably at least 3 times, the height of the stay from the second support surface in the open position.

Further, according to an alternative to the semi-trailer truck, the invention may be applied in a truck with a load carrying unit directly attached to the frame of the tractive unit, ie in applications where there is not necessarily a trailer. The load carrying unit may be rigidly attached to the frame, a so-called fixed cargo platform or tippable relative to the frame, a so-called tippable platform.

## Claims

1. A device (8) for attaching a stay (7) to a vehicle frame (2), wherein the device (8) comprises an attachment member (9) configured for being rigidly connected to the vehicle frame (2), wherein the attachment member (9) comprises a first support surface (15) for supporting an upper surface (16) of a first end (17) of the stay (7) and a second support surface (19) at a distance from the first support surface (15) for supporting a lower surface of the stay (7) at a distance from the first end of the stay, and wherein the device comprises a clamp member (10) for clamping the stay (7) against the second support surface of the attachment membe wherein the clamp member is positioned on the stay and fastened to the attachement members such that the stay is clamped between the attachment member and the clamp member **characterized in that** the clamp member (10) is movably arranged in relation to the second support surface (19) between an open position and a clamping position and that the clamp member (10) is arranged so that a clamp surface (20) of the clamp member (10) can be positioned at a sufficient distance from the second support surface (19) in the open position for allowing a pivoting motion of the stay (7) about a pivot point at the first support surface (15) to a position resting on the second support surface (19) during assembly.

2. A device according to claim 1, **characterized in that** the clamp member (10) is removably arranged in relation to the attachment member (9) and/or
**in that** the clamp member (10) is pivotably arranged relative to the attachment member (9) between a non-fastened position and said clamping position.

3. A device according to claim 2, **characterized in that** the clamp member (10) is configured to be fastened to the attachment member (9) via a fastening means (23) at a distance from a pivot axis between the clamp member and the attachment member (9).

4. A device according to claim 3, **characterized in that** the fastening means (23) comprises at least one bolt and/or
**in that** the fastening means (23) is configured so that a fastening direction forms an oblique angle to a plane defining a frame side of the vehicle frame during mounting and/or
**in that** the attachment member (9) comprises a base portion (11) for attachment to the frame (2) and that the base portion comprises the first support surface (15) and/or
**in that** the attachment member (9) comprises a projecting portion (18) projecting from the base portion (11) and that the projecting portion comprises the second support surface (19).

5. A device according to any preceding claim, **characterized in that** the first support surface (15) forms part of an opening (14) for receiving the first end (17) of the stay (7) and/or
**in that** the second support surface (19) comprises means (24) for engagement with the stay (7) for preventing the stay from any undesired withdrawal from the attachment member (9) before the clamp member is fastened to the attachment member and/or
**in that** the second support surface (19) of the attachment member (9) and a clamp surface (20) of the clamp member (10) forms a substantially cylindrical structure for receiving the stay (7).

6. A vehicle (1) comprising a frame (2), **characterized in that** a device (8) according to any preceding claim is attached to the frame.

## Patentansprüche

1. Vorrichtung (8) zur Montage einer Strebe (7) an einem Fahrzeugrahmen (2), wobei die Vorrichtung (8) ein Montageelement (9) umfasst, das für eine feste Verbindung mit dem Fahrzeugrahmen (2) ausgebildet ist, wobei das Montageelement (9) eine erste Haltefläche (15) für ein Halten einer oberen Oberfläche (16) eines ersten Endes (17) der Strebe (7) und eine zweite Haltefläche (19) in einem Abstand von der ersten Haltefläche (15) zum Halten einer unteren Oberfläche der Strebe (7) in einem Abstand von dem ersten Ende der Strebe umfasst, und wobei die Vorrichtung ein Klemmelement (10) für ein Klemmen der Strebe (7) gegen die zweite Haltefläche des Montageelements umfasst, wobei das Klemmelement so an der Strebe angeordnet und an dem Montageelement befestigt ist, dass die Strebe zwischen dem Montageelement und dem Klemmelement geklemmt wird, **dadurch gekennzeichnet, dass** das Klemmelement (10) bezüglich der zweiten Haltefläche (19) zwischen einer offenen Position und einer Klemmposition bewegbar angeordnet ist und dass das Klemmelement (10) so angeordnet ist, dass eine Klemmfläche (20) des Klemmelements (10) in einem ausreichenden Abstand von der zweiten Haltefläche (19) in der offenen Position positioniert werden kann, damit während der Montage eine Schwenkbewegung der Strebe (7) um einen Schwenkpunkt an der ersten Haltefläche (15) in eine Position, die an der zweiten Haltefläche (19) anliegt, möglich ist.

2. Vorrichtung nach Anspruch 1, **dadurch gekennzeichnet, dass** das Klemmelement (10) bezüglich des Montageelements (9) entfernbar angeordnet ist und/oder
dass das Klemmelement (10) bezüglich des Montageelements (9) zwischen einer nicht befestigten Position und der Klemmposition schwenkbar angeordnet ist.

3. Vorrichtung nach Anspruch 2, **dadurch gekennzeichnet, dass** das Klemmelement (10) so ausgebildet ist, dass es an dem Montageelement (9) über eine Befestigungseinrichtung (23) in einem Abstand von der Schwenkachse zwischen dem Klemmelement und dem Montageelement (9) befestigt werden kann.

4. Vorrichtung nach Anspruch 3, **dadurch gekennzeichnet, dass** die Befestigungseinrichtung (23) wenigstens einen Bolzen umfasst und/oder dass die Befestigungseinrichtung (23) so ausgebildet ist, dass eine Befestigungsrichtung einen schrägen Winkel zu einer Ebene bildet, die eine Rahmenseite des Fahrzeugrahmens während der Montage bildet und/oder dass das Montageelement (9) einen Basisabschnitt (11) zur Montage an dem Rahmen (2) umfasst und dass der Basisabschnitt die erste Haltefläche (15) umfasst, und/oder
dass das Montageelement (9) einen vorstehenden Abschnitt (18) umfasst, der von dem Basisabschnitt (11) vorsteht und dass der vorstehende Abschnitt die zweite Haltefläche (19) umfasst.

5. Vorrichtung nach irgendeinem vorhergehenden Anspruch, **dadurch gekennzeichnet, dass** die erste Haltefläche (15) einen Teil einer Öffnung (14) zur Aufnahme des ersten Endes (17) der Strebe (7) bildet und/oder dass die zweite Haltefläche (19) eine Einrichtung (24) für einen Eingriff mit der Strebe (7) umfasst, um ein unerwünschtes Herausziehen der Strebe aus dem Montageelement (9) zu verhindern, bevor das Klemmelement an dem Montageelement befestigt ist und/oder
dass die zweite Haltefläche (19) des Montageelements (9) und eine Klemmfläche (20) des Klemmelements (10) eine im Wesentlichen zylindrische Struktur zur Aufnahme der Strebe (7) bilden.

6. Fahrzeug mit einem Rahmen (2), **dadurch gekennzeichnet, dass** eine Vorrichtung (8) nach irgendeinem vorhergehenden Anspruch an dem Rahmen befestigt ist.

## Revendications

1. Dispositif (8) de fixation d'un étai (7) sur un châssis de véhicule (2), dans lequel le dispositif (8) comprend un élément de fixation (9) configuré pour être relié de manière rigide au châssis du véhicule (2), dans lequel l'élément de fixation (9) comprend une première surface de support (15) pour supporter une surface supérieure (16) d'une première extrémité (17) de l'étai (7) et une seconde surface de support (19) à une distance de la première surface de support (15) pour supporter une surface inférieure de l'étai (7) à une distance de la première extrémité de l'étai, et dans lequel le dispositif comprend un élément de serrage (10) pour serrer l'étai (7) contre la seconde surface de support de l'élément de fixation dans lequel l'élément de serrage est positionné sur l'étai et fixé sur l'élément de fixation de telle sorte que l'étai est serré entre l'élément de fixation et l'élément de serrage, **caractérisé en ce que** l'élément de serrage (10) est agencé de manière mobile par rapport à la seconde surface de support (19) entre une position ouverte et une position de serrage et **en ce que** l'élément de serrage (10) est agencé de sorte qu'une surface de serrage (20) de l'élément de serrage (10) peut être positionnée à une distance suffisante de la seconde surface de support (19) dans la position ouverte pour permettre un mouvement de pivotement de l'étai (7) autour d'un point de pivotement au niveau de la première surface de support (15) vers une position d'appui sur la seconde surface de support (19) pendant l'assemblage.

2. Dispositif selon la revendication 1, **caractérisé en ce que** l'élément de serrage (10) est agencé de manière amovible par rapport à l'élément de fixation (9) et/ou **en ce que** l'élément de serrage (10) est agencé de manière pivotante par rapport à l'élément de fixation (9) entre une position non fixée et la position de serrage.

3. Dispositif selon la revendication 2, **caractérisé en ce que** l'élément de serrage (10) est configuré pour être fixé sur l'élément de fixation (9) par l'intermédiaire de moyens de fixation (23) à une distance à partir d'un axe de pivotement entre l'élément de serrage et l'élément de fixation (9).

4. Dispositif selon la revendication 3, **caractérisé en ce que** les moyens de fixation (23) comprennent au moins un boulon et/ou **en ce que** les moyens de fixation (23) sont configurés de telle sorte qu'une direction de fixation forme un angle oblique par rapport à un plan définissant un côté du châssis du véhicule lors du montage et/ou **en ce que** l'élément de fixation (9) comprend une partie de base (11) pour la fixation sur le châssis (2) et **en ce que** la partie de base comprend la première surface de support (15) et/ou **en ce que** l'élément de fixation (9) comprend une partie en saillie (18) faisant saillie à partir de la partie de base (11) et **en ce que** la partie en saillie constitue la seconde surface de support (19).

5. Dispositif selon l'une quelconque des revendications précédentes, **caractérisé en ce que** la première surface de support (15) forme une partie d'une ouverture (14) pour recevoir la première extrémité (17) de l'étai (7) et/ou en ce que la seconde surface de support (19) comprend des moyens (24) pour venir en prise avec l'étai (7) pour empêcher tout retrait non voulu de l'étai à partir de l'élément de fixation (9) avant que l'élément de serrage ne soit fixé sur l'élément de fixation et/ou **en ce que** la seconde surface de support (19) de l'élément de fixation (9) et une surface de serrage (20) de l'élément de serrage (10) forment une structure sensiblement cylindrique destinée à recevoir l'étai (7).

6. Véhicule (1) comprenant un châssis (2), **caractérisé en ce qu'**un dispositif (8) selon l'une quelconque des revendications précédentes est fixé sur le châssis.
